# EUROPEAN PATENT SPECIFICATION

(11) **EP 1 180 949 B1**
(45) Date of publication and mention of the grant of the patent: **05.03.2003**
(21) Application number: 00928102.3
(22) Date of filing: 19.04.2000
(51) Int. Cl.: A44C 5/20, G09F 3/00, G06K 19/04, G06K 7/00

(54) **IDENTIFICATION BRACELET**
IDENTIFIKATIONSARMBAND
BRACELET D'IDENTIFICATION

(30) Priority: 22.04.1999 SI 9900099
(43) Date of publication of application: 27.02.2002
(60) Divisional application: 02004460.8
(73) Proprietor: Metra Inzeniring D.O.O., 1000 Ljubljana (SI)
(72) Inventor: CEVC, Luka, 1000 Ljubljana (SI)
(74) Representative: Kohlmann, Kai, Dipl.-Ing.
(86) International application number: SI0000009
(87) International publication number: WO00065531

(56) References cited:
- DE-A- 3 248 770
- DE-A- 4 402 229
- FR-A- 2 086 684
- US-A- 4 150 784
- US-A- 4 377 047
- US-A- 5 877 742

## Description

The present invention relates to identification bracelet or similar annular attaching requisite equipped by electronic data carrier. The identification bracelet as such may be generally manufactured either in form of a bracelet intended to use e.g. in swimming pools, or also e.g. in form of a collar for animals, or moreover like a watch-belt or generally even like any other attaching or clamping requisite foreseen for attaching certain object around another object of at least cylindrical shape. The bracelet or commonly such an attaching requisite comprises an electronic data carrier, e.g. a microprocessor or appropriate printed circuit, from which the data may be read by means of appropriate reading unit or reader, to which the bracelet may be brought in appropriate manner.

The present invention is grounded on the problem, how to conceive appropriate bracelet or similar annular attaching requisite equipped by electronic data carrier, by which any unwilled removing the bracelet should be prevented on the one hand, and on the other hand just single-hand setting-up the bracelet or similar annular attaching requisite with appropriate looseness should be possible.

In order to simplify, in the following description the term bracelet will be used exclusively. However it should be noted that the term bracelet means any attaching requisite either in form of a bracelet intended to use e.g. in swimming pools, or also e.g. in form of a collar for animals, or moreover like a watch-belt or moreover in general also like any other attaching or clamping requisite foreseen for attaching certain object around another object of at least cylindrical shape.

A bracelet is disclosed in US 4,377,047, which comprises a housing having a hollow part in which an identification device can be accomodated. The housing is provided with two straps, one having a number equidistant triangular protrusions which cooperate with a guiding eye at the end of the other strap such that the end of the one strap can be easily inserted through the guiding eye in the tightening direction but, once being tightened, cannot easily be retracted.

The stated technical problem has been successfully solved by means of an identification bracelet or similar annular attaching requisite in accordance with attached patent claims, which may be equipped by an electronic data carrier.

The said bracelet comprises a narrow strap which is equipped by openings in equidistant arrangement and ended by an arresting part having two sidely asunder arranged protrusions and two with respect to these adjacent longitudinal grooves, as well as a wide strap which is ended by a guide eye and equipped by a storage device consisting of a hollow part and a cover and also by appropriate projections in equidistant arrangement, over which an appropriate slide can be moved along the said wide strap.

The preferered embodiment of the bracelet as such consists of the narrow strap which is equipped by the openings in equidistant arrangement and the arresting part having two sidely asunder arranged protrusions and two longitudinal grooves, as well as of the wide strap which is equipped by the guide eye and by the storage consisting of the erosion and the cover and also by appropriate projections in equidistant arrangement, over which appropriate slide can be moved along the wide strap.

Among others, the bracelet may be characterized in that the height of the projections on the wide strap is at least slightly greater than the thickness of the narrow strap in the area of the corresponding openings. Furthermore, the guide eye of the wide strap is equipped by an opening, the width of which corresponds to the width of the narrow strap, and the transversal dimension of which corresponds to the thickness of the narrow strap. Besides, the slide is equipped by at least one opening, the width of which corresponds to the width of the wide strap, and the transversal dimension of which corresponds to the complete thickness of both straps of the bracelet. Moreover, the said slide comprises an arresting edge arranged close to the top surface of the wide strap and adjacent to the guide eye in the said opening, the width of which corresponds to the width of the wide strap, and the transversal dimension of which corresponds to the complete thickness of both straps of the bracelet.

The invention will now be described by means of an embodiment of the bracelet, which is shown in the accompanied drawings, where
- Fig. 1: is a top view of a bracelet in its disjointed state before its use;
- Fig. 2: is a partial cross-section of the bracelet according to Fig. 1 along its central longitudinal plane;
- Fig. 3: is a cross-section of the bracelet in the plane III-III according to Fig. 1;
- Fig. 4: is a top view of a jointed bracelet; and
- Fig. 5: is a cross-section of the bracelet in a plane V-V according to Fig. 4.

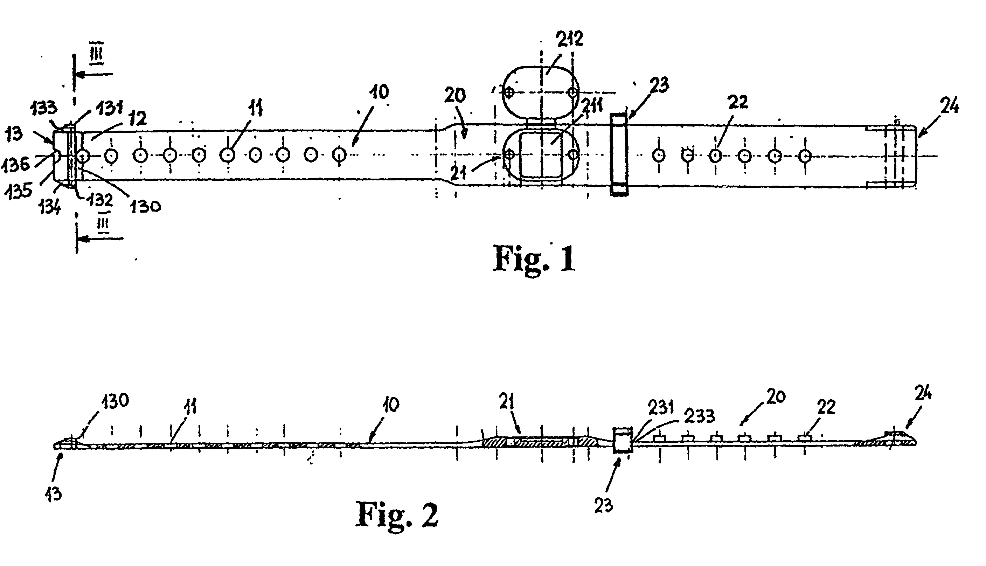

Bracelet 1 as shown in Fig. 1 - 5 is in principle formed as a tape or a belt and is moreover in this case manufactured of plastics. The bracelet 1 comprises a narrow strap 10 and a wide strap 20.

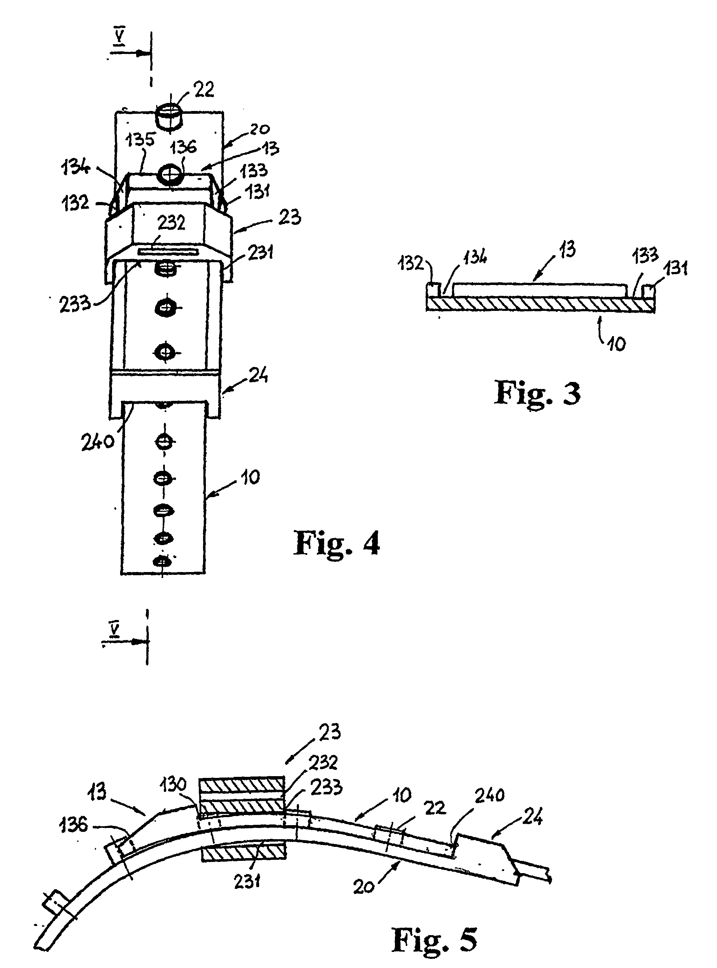

On the narrow strap 10 there are several openings 11 in equidistant arrangement, while on the end area 12 of the narrow strap 10 there is an arresting part 13. The last is shown in Fig. 3 in more detail. The arresting part 13 comprises a transversally arranged stair 130 as well as two projections 131, 132 protruding sidely asunder and having longitudinally grooves 133, 134. The arresting part 13 is moreover on its end edge equipped by a centrally arranged semicircular recess 136, which diameter corresponds to diameter of the aforementioned openings 11.

On the wide strap 20 close to the narrow strap 10 there is a storage 21 serving for receipt of a not-shown microprocessor or any other corresponding assembly for memorizing and processing electronic data in order to enable identification of the bracelet 1. Further, several projections 22 are available on the wide strap 20 in equidistant arrangement. Still further, on the wide strap 20 there a slide 23 is placed and quite on the end of the wide strap 20 there is a guide eye 24.

The storage device 21 comprises a hollow part 211 and a cover 212 serving for covering said hollow part 211.

Projections 22 are as said before arranged equidistant each to another, while the arrangement thereof which means their thickness respectively by the discussed embodiment their diameter as well as the distances therebetween, fully corresponds to the arrangement (diameter and distances) of the openings 11 on the narrow strap 10 of the bracelet 1. However, it is important that the height of the projections 22 is higher than the length of the openings 11 in their axial direction respectively than the thickness of the narrow strap 10 in the area of the said openings 11.

By the present embodiment the slide 23 is equipped by two longitudinal openings 231, 232 (Fig. 4). Dimensions of the greater opening 231 are defined in such manner, that its width corresponds to the width of the wide strap 20 and its height to the totally thickness of both straps 10, 20 of the bracelet 1. The greater opening 231 further comprises an arresting edge 233, which is arranged on the side adjacent to the guide eye 24 and lies on the upper respectively outer side of the corresponding strap 20.

The guide eye 24 is conceived to receive the narrow strap 10 and comprises to this aim an opening 240, the width of which corresponds to the width of the narrow arm 10, while its transversal dimension corresponds to the thickness of the bracelet 1 in the area of its narrow strap 10.

As soon as the bracelet 1 in its original form as shown in Fig. 1 and 2 is bent into annular form, the arresting part 13 of the narrow strap 10 is pushed into the greater opening 240 of the guide eye 24 on the wide strap 20, and thereafter also through the greater opening 231 of the slide 23. During such pushing of the arresting part 13, the side projections 131, 132 of the part 13 are moved inwards in direction each towards another. Both straps 10, 12 of the bracelet 1 are thus bent in form of annular ring and are moreover partially overlapped, since the narrow strap 10 is placed onto the wide strap 20.

Thanks to protrusions 131, 132, the bracelet 1 is unable in such a state to be disjointed. When the slide 23 is placed adjacent to the guide eye 24, the narrow strap 10 can be slided freely along the outer surface of the wide strap 20, while the openings 11 are passing over respectively near the projections 22. In such manner the bracelet 1 placed on the hand of the user can be moved and moreover also its looseness can be settled. In certain states with respect to overlapping the openings 11 and the projections 22 - when the projections 22 partially protrude outwards from the openings 11 - the slide 23 can be pressed in the transversal direction and moved in such a pressed state in the longitudinal direction respectively in the circular direction of the bracelet 1 towards to the arresting part 13 of the narrow strap 10 of the bracelet 1. The consequence of such a movement is arresting of openings 11 and projections 22 on the certain length of the circumferential area of the bracelet 1 between the slide 23 and the guide eye 24. As soon as the said pressing the slide 23 in the transversal direction is finished, the arresting edge 233 of the slide is leant behind that appropriate part of the closest projection 22, which protrudes outwards from the corresponding opening 11 of the narrow strap 10 of the bracelet 1. In such a state the projection 22 lying closest to the arresting part 13 of the narrow strap 10, is partially inserted into the semicircular recess 136 available on the end area 135 of the part 13.

## Claims

1. Identification bracelet comprising a narrow strap (10) which is equipped by openings (11), and a wide strap (20) having appropriate projections (22) adapted for inserting into the said openings (11) on the strap (10), wherein the narrow strap (10) of the bracelet (1), which is equipped by openings (11) in equidistant arrangement, is ended by an arresting part (13) having two sidely asunder arranged protrusions (131, 132) and two to these adjacent longitudinal grooves (133, 134), and the wide strap (20) is ended by a guide eye (24) and equipped by a storage device (21) consisting of a hollow part (211) and a cover (212) and also by appropriate projections (22) in equidistant arrangement, over which an appropriate slide (23) can be moved along the wide strap (20).

2. Bracelet according to claim 1, **characterized in that** the height of the projections (22) on the wide strap (20) is at least slightly greater than the thickness of the narrow strap (10) in the area of the openings (11).

3. Bracelet according to claim 1, **characterized in that** the guide eye (24) of the wide strap (20) is equipped by an opening (240), the width of which corresponds to the width of the narrow strap (10), and the transversal dimension of which corresponds to the thickness of the narrow strap (20).

4. Bracelet according to claim 1, **characterized by** that the slide (23) is equipped by at least one opening (231), the width of which corresponds to the width of the wide strap (20), and the transversal dimension of which corresponds to the complete thickness of both straps (10, 20) of the bracelet (1).

5. Bracelet according to claim 4, **characterized by** that the slide (23) comprises an arresting edge (233) arranged close to the top surface of the wide arm (20) and adjacent to the guide eye (24) in the said opening (231), the width of which corresponds to the width of the wide strap (20).

## Patentansprüche

1. Identifikationsarmband, umfassend einen schmalen Riemen (10), der mit Öffnungen (11) und einem breiten Riemen (20) versehen ist, der geeignete Vorsprünge (22) besitzt, die zum Einfügen in die Öffnungen (11) auf dem Riemen (10) geeignet sind, wobei der schmale Riemen (10) des Armbands (1), der mit Öffnungen (11) in abstandsgleicher Anordnung versehen ist, mit einem Arretierungsteil (13) endet, der zwei seitliche, auseinander liegende Vorsprünge (131, 132) und zwei zu ihnen nebeneinander liegende Längsnuten (133,134) besitzt, und wobei der breite Riemen (20) mit einer Führungsöse (24) endet und mit einer Lagervorrichtung (21) versehen ist, die aus einem Hohlteil (211) und einer Abdeckung (212) besteht, sowie mit geeigneten Vorsprüngen (22) in abstandsgleicher Anordnung, über die ein geeignetes Gleitelement (23) entlang des breiten Riemens (20) bewegt werden kann.

2. Armband nach Anspruch 1, **dadurch gekennzeichnet, dass** die Höhe der Vorsprünge (22) auf dem breiten Riemen (20) mindestens etwas größer ist, als die Dicke des schmalen Riemens (10) im Bereich der Öffnungen (11).

3. Armband nach Anspruch 1, **dadurch gekennzeichnet, dass** die Führungsöse (24) des breiten Riemens (20) mit einer Öffnung (240) versehen ist, deren Breite der Breite des schmalen Riemens (10) entspricht und deren Quermaß der Dicke des schmalen Riemens (10) entspricht.

4. Armband nach Anspruch 1, **dadurch gekennzeichnet, dass** das Gleitelement (23) mit mindestens einer Öffnung (231) versehen ist, deren Breite der Breite des breiten Riemens (20) entspricht, und deren Quermaß der Gesamtdicke beider Riemen (10, 20) des Armbands (1) entspricht.

5. Armband nach Anspruch 4, **dadurch gekennzeichnet, dass** das Gleitelement (23) eine Arretierungskante (233) umfasst, die nahe der Oberseite des breiten Riemens (20) und neben der Führungsöse (24) in der Öffnung (231) angeordnet ist, und dessen Breite der Breite des breiten Riemens (20) entspricht.

## Revendications

1. Bracelet d'identification comprenant une bande étroite (10) qui est dotée d'ouvertures (11) et d'une bande large (20) présentant des protubérances appropriées (22) prévues pour être insérées dans lesdites ouvertures (11) sur la bande (10), bracelet dans lequel la bande étroite (10) du bracelet (1), qui est équipée d'ouvertures (11) disposées à équidistance, est terminée par une partie d'arrêt (13) ayant deux protubérances disposées latéralement à distance les unes des autres (131, 132) et deux rainures longitudinales (133, 134) adjacentes à ces protubérances et dans lequel la bande large (20) est terminée par un oeillet de guidage (24) et est équipée d'un dispositif de logement (21) constitué d'une partie creuse (211) et d'un couvercle (212) et également de protubérances appropriées (22) disposées à équidistance sur lesquelles un passant coulissant (23) approprié peut être déplacé le long de la large bande (20).

2. Bracelet selon la revendication 1, **caractérisé en ce que** la hauteur des protubérances (22) sur la bande large (20) est au moins légèrement supérieure à l'épaisseur de la bande étroite (10) dans la zone des ouvertures (11).

3. Bracelet selon la revendication 1, **caractérisé en ce que** l'oeillet de guidage (24) de la bande large (20) est muni d'une ouverture (240) dont la largeur correspond à la largeur de la bande étroite (10) et dont la dimension transversale correspond à l'épaisseur de la bande étroite (10).

4. Bracelet selon la revendication 1, **caractérisé en ce que** la boucle coulissante (23) est équipée au moins d'une ouverture (231), dont la largeur correspond à la largeur de la bande large (20) et dont la dimension transversale correspond à l'épaisseur totale des deux bandes (10, 20) du bracelet (1).

5. Bracelet selon la revendication 4, **caractérisé en ce que** le passant coulissant (23) comprend un bord d'arrêt (233) disposé près de la surface de dessus de la bande large (20) et attenant à l'oeillet de guidage (24) dans ladite ouverture (231), dont la largeur correspond à la largeur de la bande large (20).
